(19)

**Europäisches Patentamt**
**European Patent Office**
**Office européen des brevets**

(11) **EP 4 002 288 A1**

(12) **EUROPEAN PATENT APPLICATION**

(43) Date of publication:
**25.05.2022 Bulletin 2022/21**

(21) Application number: **20207241.9**

(22) Date of filing: **12.11.2020**

(51) International Patent Classification (IPC):
**G06T 15/08** (2011.01)      **G06T 19/00** (2011.01)

(52) Cooperative Patent Classification (CPC):
**G06T 15/08; G06T 19/00;** G06T 2210/41

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **NICKISCH, Hannes**
  **5656 AE Eindhoven (NL)**

• **SCHMITT, Holger**
  **5656 AE Eindhoven (NL)**
• **LOSSAU, Tanja**
  **5656 AE Eindhoven (NL)**
• **KLINDER, Tobias**
  **5656 AE Eindhoven (NL)**

(74) Representative: **Philips Intellectual Property &
Standards
High Tech Campus 52
5656 AG Eindhoven (NL)**

(54) **METHODS AND SYSTEMS FOR RENDERING REPRESENTATIONS OF SUBJECT VASCULATURE**

(57)      The invention provides a method for obtaining a 3D rendering of a coronary vasculature of a subject. The method includes obtaining volumetric computed tomography data representative of a cardiac region of the subject and deriving a predicted location of the coronary vasculature from the volumetric computed tomography data.

One or more subject-specific rendering parameters are derived based on the volumetric computed tomography data and the predicted location of the coronary vasculature. The one or more subject specific parameters describe a rendering transfer function for transferring the volumetric computed tomography data into a 3D image space.

A representation of the coronary vasculature is then rendered in a 3D image space based on the one or more subject-specific rendering parameters, the volumetric computed tomography data and the predicted location of the coronary vasculature.

Obtain volumetric computed tomography data — 210

Derive predicted location of coronary vasculature — 220

Derive one or more subject specific rendering parameters — 230

Render a representation of the coronary vasculature — 240

200

Fig. 2

**Description**

FIELD OF THE INVENTION

The invention relates to the field of 3D rendering, and more specifically to the field of 3D rendering based on computed tomography data.

BACKGROUND OF THE INVENTION

Computed Tomography (CT) imaging, and particularly Coronary Computed Tomography Angiography (CCTA) imaging, are established imaging modalities to assess the coronary arteries of a subject. These imaging modalities provide the user with detailed information regarding the morphology and geometry of the vessels. Further, these imaging modalities may be used to predict the future risk for Major Adverse Cardiovascular Events (MACE) to occur in the subject.
For a comprehensive assessment of a cardiac CT dataset, a high level of expertise is required. In particular for volumetric CT data, many image slices must be manually inspected by a clinician in order to draw a holistic patient-specific conclusion from the obtained data set.
Common image analysis workflows, such as: cardiac chamber segmentation; coronary artery segmentation, followed by coronary lumen/wall segmentation; and coronary plaque analysis, all require human user interaction at certain stages and require a significant time investment from the user.
Common volumetric renderings of CT data sets produce quick and interactive representations of coronary artery data and are often sufficient to provide at least an overview of the status of the subject. However, volumetric renderings require the specification of a window function, which needs to be manually tuned in order to achieve an adequate rendering quality.
There is therefore a need for a means of obtaining an accurate rendering of the cardiac vasculature of a subject with minimal user interaction.

SUMMARY OF THE INVENTION

The invention is defined by the claims.
According to examples in accordance with an aspect of the invention, there is provided a method for obtaining a 3D rendering of a coronary vasculature of a subject, the method comprising:

obtaining volumetric CT data representative of a cardiac region of the subject;
deriving a predicted location of the coronary vasculature from the volumetric CT data;
deriving one or more subject-specific rendering parameters based on the volumetric CT data and the predicted location of the coronary vasculature, wherein the one or more subject specific parameters describe a rendering transfer function for transferring the volumetric CT data into a 3D image space; and
rendering, in the 3D image space, a representation of the coronary vasculature based on the one or more subject-specific rendering parameters, the volumetric CT data and the predicted location of the coronary vasculature.

The invention provides a method for obtaining an accurate 3D rendering of the coronary vasculature of the subject.
By deriving one or more subject-specific rendering parameters based on the CT data obtained from the subject, the coronary vasculature may be accurately delineated without requiring any additional input from a user, thereby allowing for an immediate assessment of the coronary vasculature.
Further, the method provides for automatic enhancement of the coronary vasculature during the rendering process as the rendering parameters are determined for each individual subject, rather than using a generalized set of rendering parameters.
In an embodiment, deriving the predicted location of the coronary vasculature comprises:

identifying a coronary region of interest representing a coronary vessel from the volumetric CT data; and
segmenting the coronary region of interest, thereby obtaining a predicted region of interest.

In an embodiment, the predicted region of interest comprises a probability mask representing a probability of a voxel of the volumetric CT data representing the coronary vessel.
In this way, the voxels of the volumetric CT data may be assigned a probability value indicating the likelihood that said voxel contains part of the coronary vessel of the subject. Accordingly, the probability values may be utilized in the rendering step in order to increase the accuracy of the rendered representation.

In an embodiment, rendering the representation of the coronary vasculature is based on voxels of the volumetric CT data having a probability greater than a predetermined threshold.

In this way, only voxels that are likely to contain part of the coronary vessel are used in the rendering step, thereby increasing the accuracy of the rendering and reducing the computational load for performing the rendering. The threshold may be adjustable by the user, meaning that the level of accuracy of the rendering may be tuned to the given application of the method. The rendering automatically enhances the coronaries and allows to focus the clinician's attention on the relevant part of the coronary tree.

In an embodiment, deriving the one or more subject-specific rendering parameters comprises applying a regression network to the volumetric CT data and the predicted location of the coronary vasculature.

In this way, the subject-specific rendering parameters may be derived automatically from the volumetric CT data obtained from the subject in an accurate manner without requiring significant amounts input data or requiring any input from the user.

In an embodiment, the one or more subject-specific rendering parameters are adjusted on a per voxel basis based on voxels of the volumetric CT data and the predicted location of the coronary vasculature, thereby generating one or more locally adaptive rendering parameters.

In this way, the one or more subject-specific rendering parameters may be locally adaptive based on the content of the volumetric CT data depending on the exact content of a given voxel of the volumetric CT data. Accordingly, the accuracy of the rendered representation may be increased.

In an embodiment, rendering the representation of the coronary vasculature comprises, for each voxel of the volumetric CT within the predicted location of the coronary vasculature, applying the rendering transfer function of the one or more locally adaptive rendering parameters to said voxel.

In this way, a locally adaptive rendering transfer function is applied to the voxels of the volumetric CT data that are associated with the predicted location of the coronary vasculature, thereby generating an accurate rendering of the coronary vasculature.

In an embodiment, the regression network is trained based on one or more annotated training images, the one or more annotated training images including representations of a coronary vasculature.

In this way, the regression network may be trained to accurately identify parts of the coronary vasculature within the volumetric CT data and learn the optimal rendering parameters for said part, thereby increasing the accuracy of the rendering.

In an embodiment, the one or more annotated training images comprise an annotation, the annotation representing a feature of the coronary vasculature, wherein the feature comprises one or more of:

> a lumen;
> a centerline of a vessel;
> a valve;
> a bifurcation;
> a calcification;
> a stent;
> a region of soft plaque.

In this way, the regression network may be trained using a variety of features that may appear in coronary vasculature.

In an embodiment, the volumetric CT data comprises coronary CT angiography data.

In an embodiment, the volumetric CT data comprises spectral CT data, wherein the spectral CT data comprises a plurality of image channels, and wherein the method further comprises:

> deriving a weighting for each of the plurality of image channels, wherein the weighting is adjusted based on the spectral CT data of the given image channel; and
> combining the spectral CT data of the plurality of image channels based on the derived weightings.

In an embodiment, the volumetric CT data comprises a time series of volumetric CT data, wherein the time series of volumetric CT data is representative of the cardiac region of the subject at a plurality of stages of a cardiac cycle.

According to examples in accordance with an aspect of the invention, there is provided a computer program product comprising computer program code means which, when executed on a computing device having a processing system, cause the processing system to perform all of the steps of the method according to any of claims 1 to 12.

According to examples in accordance with an aspect of the invention, there is provided a processor for obtaining a 3D rendering of a coronary vasculature of a subject, wherein the processor is adapted to:

obtain volumetric CT data representative of a cardiac region of the subject;
derive a predicted location of the coronary vasculature from the volumetric CT data;
derive one or more subject-specific rendering parameters based on the volumetric CT data and the predicted location of the coronary vasculature;
render a representation of the coronary vasculature based on the one or more subject-specific rendering parameters, the volumetric CT data and the predicted location of the coronary vasculature.

According to examples in accordance with an aspect of the invention, there is provided a CT imaging system, the system comprising:

the processor as claimed in claim 14;
a radiation source adapted to emit radiation towards a subject;
a radiation detector adapted to detect radiation from the subject; and
an image processor adapted to generate volumetric CT data based on the detected radiation.

These and other aspects of the invention will be apparent from and elucidated with reference to the embodiments) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 shows an example of a CT imaging system;
Figure 2 shows a method for obtaining a 3D rendering of a coronary vasculature of a subject;
Figure 3 shows an example of a tight coronary region of interest; and
Figure 4 shows an example of a 3D rendering of the coronary arteries of a subject.

DETAILED DESCRIPTION OF THE EMBODIMENTS

The invention will be described with reference to the Figures.
It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.
The invention provides a method for obtaining a 3D rendering of a coronary vasculature of a subject. The method includes obtaining volumetric CT data representative of a cardiac region of the subject and deriving a predicted location of the coronary vasculature from the volumetric CT data.
One or more subject-specific rendering parameters are derived based on the volumetric CT data and the predicted location of the coronary vasculature. The one or more subject specific parameters describe a rendering transfer function for transferring the volumetric CT data into a 3D image space.
A representation of the coronary vasculature is then rendered in a 3D image space based on the one or more subject-specific rendering parameters, the volumetric CT data and the predicted location of the coronary vasculature.

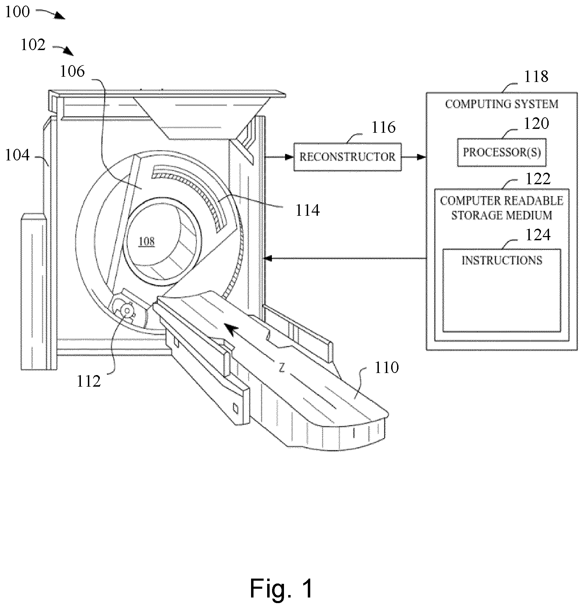

Figure 1 schematically illustrates a system 100 including an imaging system 102 such as a CT scanner configured for spectral (multi-energy) imaging. The imaging system 102 includes a generally stationary gantry 104 and a rotating gantry 106, which is rotatably supported by the stationary gantry 104 and rotates around an examination region 108 about a z-axis. A subject support 110, such as a couch, supports an object or subject in the examination region 108.
A radiation source 112, such as an x-ray tube, is rotatably supported by the rotating gantry 106, rotates with the rotating gantry 106, and emits radiation that traverses the examination region 108. In one instance, the radiation source 112 includes a single broad spectrum x-ray tube. In another instance, the radiation source 112 includes a single x-ray tube configured to switch between at least two different emission voltages (e.g., 80 kVp and 140 kVp) during scanning. In yet another instance, the radiation source 112 includes two or more x-ray tubes configured to emit radiation having different mean spectra. In still another instance, the radiation source 112 includes a combination thereof.
A radiation sensitive detector array 114 subtends an angular arc opposite the radiation source 112 across the examination region 108. The radiation sensitive detector array 114 detects radiation traversing the examination region 108 and generates an electrical signal(s) (projection data) indicative thereof. Where the radiation source 112 includes a single broad spectrum x-ray tube, the radiation sensitive detector array 112 includes energy-resolving detectors (e.g., direct conversion photon counting detectors, at least two sets of scintillators with different spectral sensitivities (multi-layer), etc.). With kVp switching and multi-tube configurations, the detector array 114 can include single layer detectors, direct conversion photon counting detectors, and/or multi-layer detectors. The direct conversion photon counting detectors may include a conversion material such as CdTe, CdZnTe, Si, Ge, GaAs, or other direct conversion material.

An example of multi-layer detector includes a double decker detector such as the double decker detector described in US 7,968,853.

A reconstructor 116 receives spectral projection data from the detector array 114 and reconstructs spectral volumetric image data such as sCCTA image data, a high-energy image, a low energy image, a photoelectric image, a Compton scatter image, an iodine image, a calcium image, a virtual non-contrast image, a bone image, a soft tissue image, and/or other basis material image. The reconstructor 116 can also reconstruct non-spectral volumetric image data, e.g., by combining spectral projection data and/or spectral volumetric image data. Generally, the spectral projection data and/or spectral volumetric image data will include data for at least two different energies and/or energy ranges.

A computing system 118 serves as an operator console. The console 118 includes a human readable output device such as a monitor and an input device such as a keyboard, mouse, etc. software resident on the console 118 allows the operator to interact with and/or operate the scanner 102 via a graphical user interface (GUI) or otherwise. The console 118 further includes a processor 120 (e.g., a microprocessor, a controller, a central processing unit, etc.) and a computer readable storage medium 122, which excludes non-transitory medium, and includes transitory medium such as a physical memory device, etc. The computer readable storage medium 122 includes instructions 124 for operating the system. The processor 120 is configured to execute the instructions 124. The processor 120 may additionally be configured to execute one or more computer readable instructions carried by a carrier wave, a signal and/or other transitory medium. In a variation, the processor 120 and the computer readable storage medium 122 are part of another computing system, which is separate from the computing system 118.

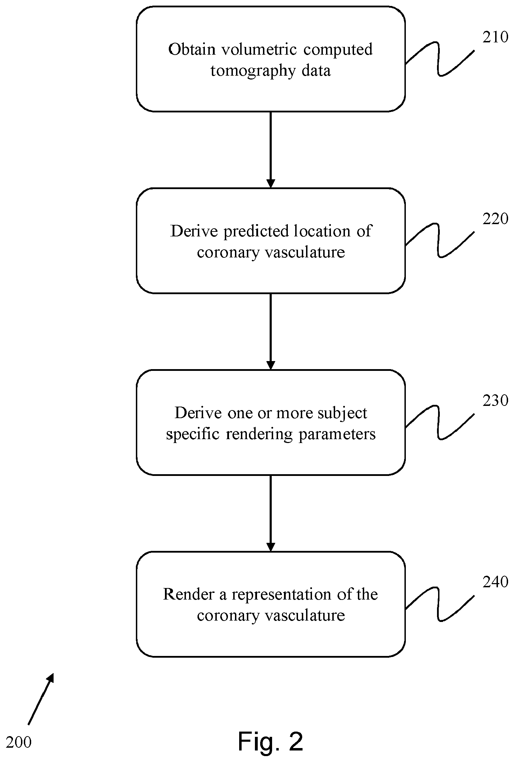

Figure 2 shows a method 200 for obtaining a 3D rendering of a coronary vasculature of a subject, which may for example be implemented partially, or completely, by the system described above with respect to Figure 1.

The method 200 begins at step 210 by obtaining volumetric CT data representative of a cardiac region of the subject. For example, the volumetric CT data may comprise coronary CT angiography data.

In a further example, the volumetric CT data may comprise a time series of volumetric CT data representative of the cardiac region of the subject at a plurality of stages of a cardiac cycle. In this case, the following methods may be performed a number of times, thereby obtaining a rendering of the coronary vasculature of the subject at a plurality of stages of the cardiac cycle.

In step 220, a predicted location of the coronary vasculature is derived from the volumetric CT data.

For example, deriving the predicted location of the coronary vasculature may include identifying a coronary region of interest representing a coronary vessel from the volumetric CT data and segmenting the coronary region of interest, thereby obtaining a predicted region of interest. This is based on a tight coronary region of interest segmentation.

The predicted region of interest may include a probability mask representing a probability of a voxel of the volumetric CT data representing the coronary vessel. Put another way, the likelihood of a given voxel representing a coronary vessel may determined based on a segmentation of the volumetric CT data. The rendering of the representation of the coronary vasculature in a subsequent step may be based on voxels of the volumetric CT data having a probability greater than a predetermined threshold.

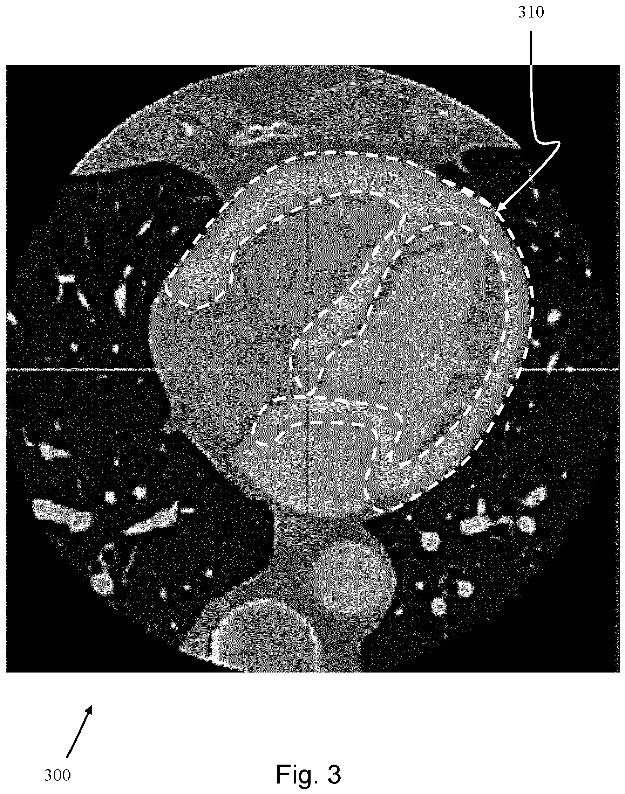

For the prediction of the coronary region of interest, a set of annotated training data may be used to train a standard volumetric image segmentation network to act as a predictor, such as those as described in Brosch, T. et al. "Foveal fully convolutional nets for multi-organ segmentation", In Medical Imaging 2018: Image Processing (Vol. 10574, p. 105740U), International Society for Optics and Photonics. The output of the trained image segmentation algorithm may be a probabilistic mask that covers a part of the volume described by the volumetric CT data where coronary arteries are to be expected. An example of a segmented coronary region of interest is shown in Figure 3 and is discussed further below.

In step 230, one or more subject-specific rendering parameters are determined based on the volumetric CT data and the predicted location of the coronary vasculature, wherein the one or more subject specific parameters describe a rendering transfer function for transferring the volumetric CT data into a 3D image space.

The rendering parameters may comprise a global window function $f(t)$ mapping the local CT voxel intensities in HU (Hounsfield units) to the dynamic range of the final rendering. The dynamic range of the final rendering may be defined, for example, as the interval [0,1] and is used by a ray-casting algorithm to render the representation of the coronary vasculature from the CT data. For example, the voxel of the volumetric CT data having the highest intensity in HU may be mapped to the dynamic range value 1 and the voxel of the volumetric CT data having the lowest intensity in HU may be mapped to the dynamic range value 0. The voxel intensities occupying the range between the minimum and maximum HU intensities in the volumetric CT data may be mapped to dynamic range values between 0 and 1 accordingly.

In an example, the window function may be specified globally by two parameters, level, L, and window width, W, yielding the following expression:

$$f(t) = min( max( 0.5+(t-L)/W, 0 ), 1 )$$

This defines a window function f (i.e. a grey level mapping function) which is applied to the pixel intensity t, for example in HU. The intensity t is converted to the interval [0,1] by the window function f.

The parameters L and W are parameters of the window function. The window function is the input of the rendering function. The overall rendering function generates a 2D scene from the 3D representation. In the present case, the rendering function generates a 2D scene containing mostly the coronary arteries from only a rough preprocessing step rather than a detailed and elaborate coronary artery segmentation.

The goal is to provide an approximately correct scene but with simple processing. In particular, only the CCTA image inside the region of interest is considered. A direct 3D rendering of the region of interest could in principle be used, as the coronaries could already be well defined (because a contrast agent and calcium are bright; whereas air and soft tissue is dark). However, in order to improve the visual appearance, the windowing function is used.

The example above is a simple transfer function, but in a more complex example, the parameters may be made spatially adaptive as W(x) and L(x), where x represents positional information within the volumetric CT data.

In addition, the rendering parameters may include a spatial weight parameter, s(x), indicating how strongly a given region contributes to the rendering function. In the simplest case, this spatial weight may be equal to the predicted vessel segmentation probability mask described above.

The result of the window function may be instead be predicted by a neural network such as a convolutional neural network, CNN, applied to a local field of view. The CNN would be trained to make the coarse 3D rendering as similar to the 3D voxel mask of the coronary artery lumen.

Deriving the one or more subject-specific rendering parameters may include applying a regression network to the volumetric CT data and the predicted location of the coronary vasculature.

The regression network may use the volumetric CT data and the predicted vessel segmentation probability mask as inputs to predict the windowed CT data, i.e. the volumetric CT data after the window function has been applied, as well as the spatial weight parameter.

Put another way, given a set of CCTA scans for which the coronary arteries have been segmented as described above, for example to identify a lumen and centerline of the vessel, and given the coronary region of interest, the optimal local rendering parameters, also referred to as subject specific rendering parameters, may be learned by way of a regression network. The subject specific rendering parameters may comprise a local set of parameters describing the rendering transfer function at every given location, or voxel, within the volumetric CT data, and in particular within the coronary region of interest.

Accordingly, the one or more subject-specific rendering parameters may be adjusted on a per voxel basis based on voxels of the volumetric computed tomography data and the predicted location of the coronary vasculature, thereby generating one or more locally adaptive rendering parameters.

As described above, the subject specific, and locally adaptive, rendering parameters may be predicted by a regression network. Training of the regression network may be achieved by enforcing the high-intensity regions of the final rendering to coincide with a ground truth annotation of coronary arteries from a set of training images. Training a regression network in this manner yields locally adaptive rendering parameters resulting in an increased vessel contrast.

In other words, the regression network may be trained based on one or more annotated training images, the one or more annotated training images including representations of a coronary vasculature. The one or more annotated training images may comprise an annotation, the annotation representing a feature of the coronary vasculature, such as a lumen; a centerline of a vessel; a valve; a bifurcation; a calcification; a stent; a region of soft plaque; and the like. The locally adaptive rendering parameters may be intentionally biased in order to yield an improved contrast one or more of the annotated structures.

A regression network is an example of a machine-learning algorithm. A machine-learning algorithm is any self-training algorithm that processes input data in order to produce or predict output data. Here, the input data comprises volumetric CT data and the output data comprises subject specific rendering parameters.

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naive Bayesian models are suitable alternatives.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. $\pm 1\%$) to the training output data entries. This is commonly known as a supervised learning technique.

For example, where the machine-learning algorithm is formed from a neural network, (weightings of) the mathematical operation of each neuron may be modified until the error converges. Known methods of modifying a neural network include gradient descent, backpropagation algorithms and so on.

The training input data entries correspond to example annotated CT images. The training output data entries correspond to renderings of the coronary vasculature.

In step 240, a representation of the coronary vasculature is rendered in 3D image space based on the one or more subject-specific rendering parameters, the volumetric computed tomography data and the predicted location of the coronary vasculature.

Any spatially adaptive parametric rendering engine may be used to translate the 3D volumetric CT data to 2D screen representations to be displayed to a user. The CT system, or the processing system performing the methods described above, may comprise a user interface for the user to input local adjustments to the transfer functions of the rendering parameters in order to further increase the diagnostic value of the images.

The volumetric computed tomography data may comprise spectral computed tomography data, wherein the spectral computed tomography data comprises a plurality of image channels. Spectral CT imaging is achieved by obtaining multiple sets of CT data, or image channels, at multiple different energy levels.

In the case that the volumetric CT data does comprise spectral CT data, a weighting for each of the plurality of image channels may be derived. The weighting may be adjusted based on the data content of the given image channel. The spectral CT data of the plurality of image channels may then be combined based on the derived weightings.

The subject specific, or locally adaptive, rendering parameters and methods described above may be applied to spectral, or dual energy, CT data where several image channels are available. The image channels may be linearly combined with a locally adaptive weighting scheme that is predicted from either spectral images or a virtual "conventional" monoenergetic image. The linear weighting scheme may be similar to dark-blood dual energy images as described in Rotzinger, D. C et al. "Dark-blood" dual-energy computed tomography angiography for thoracic aortic wall imaging", European radiology, 30(1), p425-431, or virtual-non-contrast images as described in Song, I. et al. "Virtual non-contrast CT using dual-energy spectral CT: feasibility of coronary artery calcium scoring", Korean journal of radiology, 17(3), p321-329.

The methods described above propose to directly learn the optimal subject specific rendering parameters, such as a window function, in a spatially adaptive manner from an annotated image dataset where the location of the coronary arteries has been predicted. In this way, it is possible to obtain an immediate assessment of the coronary arteries of a subject with little delay. In other words, full 3D information relating to the coronary arteries is made available to the user without requiring any human interaction to specify different window or transfer functions for specific parts of the CT data, for example to differentiate between large and small vessels. The method automatically enhances the coronary arteries during the rendering process and allows the user to focus their attention on the relevant part of the coronary tree.

Figure 3 shows an example 300 of a tight coronary region of interest probability map 310 containing all voxels of a volumetric CT data set that may potentially contain the coronary arteries. Using this information, the regression network, for example, may look to this region in order to determine the rendering parameters that would result in an optimal rendering of a representation of the coronary vasculature for the subject undergoing examination.

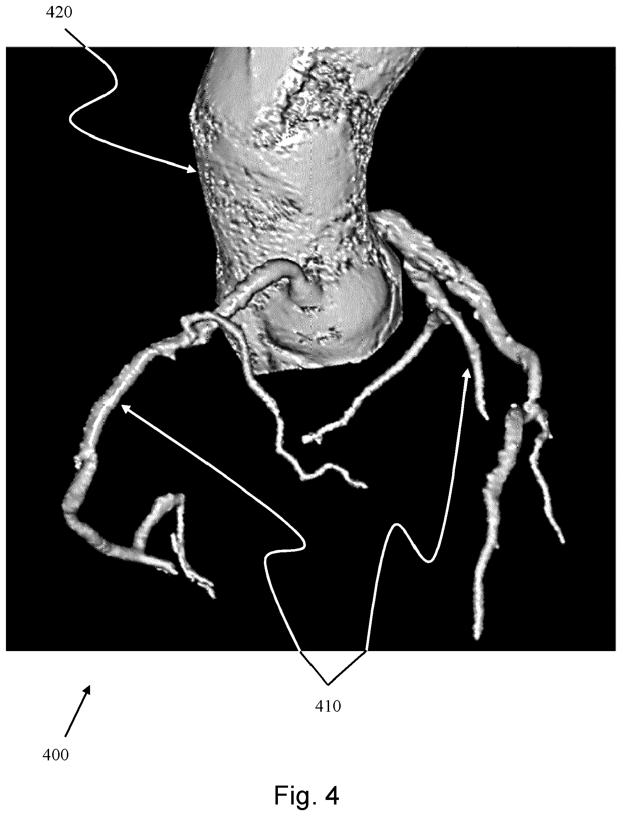

Figure 4 shows an example 400 of a 3D rendering of the coronary arteries 410 obtained within the cardiac region of interest shown in Figure 3, in addition to a rendering of the aorta 420. As can be seen from the example shown in Figure 4, by applying the methods described above to a set of volumetric CT data, it is possible to obtain an accurate rendering of the coronary arties of the subject isolated from the surround cardiac structures.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

**Claims**

1. A method for obtaining a 3D rendering of a coronary vasculature of a subject, the method comprising:

   (210) obtaining volumetric computed tomography data representative of a cardiac region of the subject;
   (220) deriving a predicted location of the coronary vasculature from the volumetric computed tomography data;
   (230) deriving one or more subject-specific rendering parameters based on the volumetric computed tomography data and the predicted location of the coronary vasculature, wherein the one or more subject specific parameters describe a rendering transfer function for transferring the volumetric computed tomography data into a 3D image space; and
   (240) rendering, in the 3D image space, a representation of the coronary vasculature based on the one or more subject-specific rendering parameters, the volumetric computed tomography data and the predicted location of the coronary vasculature.

2. The method as claimed in claim 1, wherein deriving the predicted location of the coronary vasculature comprises:

   identifying a coronary region of interest representing a coronary vessel from the volumetric computed tomography data; and
   segmenting the coronary region of interest, thereby obtaining a predicted region of interest.

3. The method as claimed in claimed in claim 2, wherein the predicted region of interest comprises a probability mask representing a probability of a voxel of the volumetric computed tomography data representing the coronary vessel.

4. The method as claimed in claim 3, wherein rendering the representation of the coronary vasculature is based on voxels of the volumetric computed tomography data having a probability greater than a predetermined threshold.

5. The method as claimed in any of claims 1 to 4, wherein deriving the one or more subject-specific rendering parameters comprises applying a regression network to the volumetric computed tomography data and the predicted location of the coronary vasculature.

6. The method as claimed in any of claims 1 to 5, wherein the one or more subject-specific rendering parameters are adjusted on a per voxel basis based on voxels of the volumetric computed tomography data and the predicted location of the coronary vasculature, thereby generating one or more locally adaptive rendering parameters.

7. The method as claimed in claim 6, wherein rendering the representation of the coronary vasculature comprises, for each voxel of the volumetric computed tomography within the predicted location of the coronary vasculature, applying the rendering transfer function of the one or more locally adaptive rendering parameters to said voxel.

8. The method as claimed in claim 7, wherein the regression network is trained based on one or more annotated training images, the one or more annotated training images including representations of a coronary vasculature.

9. The method as claimed in claim 8, wherein the one or more annotated training images comprise an annotation, the annotation representing a feature of the coronary vasculature, wherein the feature comprises one or more of:

   a lumen;
   a centerline of a vessel;
   a valve;
   a bifurcation;
   a calcification;
   a stent;
   a region of soft plaque.

**10.** The method as claimed in any of claims 1 to 9, wherein the volumetric computed tomography data comprises coronary computed tomography angiography data.

**11.** The method as claimed in any of claims 1 to 10, wherein the volumetric computed tomography data comprises spectral computed tomography data, wherein the spectral computed tomography data comprises a plurality of image channels, and wherein the method further comprises:

deriving a weighting for each of the plurality of image channels, wherein the weighting is adjusted based on the spectral computed tomography data of the given image channel; and
combining the spectral computed tomography data of the plurality of image channels based on the derived weightings.

**12.** The method as claimed in any of claims 1 to 11, wherein the volumetric computed tomography data comprises a time series of volumetric computed tomography data, wherein the time series of volumetric computed tomography data is representative of the cardiac region of the subject at a plurality of stages of a cardiac cycle.

**13.** A computer program product comprising computer program code means which, when executed on a computing device having a processing system, cause the processing system to perform all of the steps of the method according to any of claims 1 to 12.

**14.** A processor (118) for obtaining a 3D rendering of a coronary vasculature of a subject, wherein the processor is adapted to:

obtain volumetric computed tomography data representative of a cardiac region of the subject;
derive a predicted location of the coronary vasculature from the volumetric computed tomography data;
derive one or more subject-specific rendering parameters based on the volumetric computed tomography data and the predicted location of the coronary vasculature;
render a representation of the coronary vasculature based on the one or more subject-specific rendering parameters, the volumetric computed tomography data and the predicted location of the coronary vasculature.

**15.** A computed tomography imaging system, the system comprising:

the processor as claimed in claim 14;
a radiation source adapted to emit radiation towards a subject;
a radiation detector adapted to detect radiation from the subject; and
an image processor adapted to generate volumetric computed tomography data based on the detected radiation.

Fig. 1

Obtain volumetric computed
tomography data

210

Derive predicted location of
coronary vasculature

220

Derive one or more subject
specific rendering parameters

230

Render a representation of the
coronary vasculature

240

200

Fig. 2

Fig. 3

420

400

410

Fig. 4

Europäisches
Patentamt

European
Patent Office

Office européen
des brevets

# EUROPEAN SEARCH REPORT

**Application Number**

EP 20 20 7241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/262981 A1 (GULSUN MEHMET AKIF [US] ET AL) 14 September 2017 (2017-09-14)<br>* figures 1, 4, 8, 9, 11-13 *<br>* paragraph [0002] - paragraph [0006] *<br>* paragraph [0022] - paragraph [0029] *<br>* paragraph [0031] - paragraph [0033] *<br>* paragraph [0042] - paragraph [0055] *<br>* paragraph [0065] * | 1-15 | INV.<br>G06T15/08<br>G06T19/00 |
| X | US 10 206 646 B2 (SIEMENS HEALTHCARE GMBH [DE]) 19 February 2019 (2019-02-19)<br>* figures 1-3, 7-9, 12-15 *<br>* column 1, line 21 - line 31 *<br>* column 3, line 48 - column 14, line 14 * | 1-15 | |
| X | S. GLA?ER ET AL: "Automatic Transfer Function Specification for Visual Emphasis of Coronary Artery Plaque", COMPUTER GRAPHICS FORUM : JOURNAL OF THE EUROPEAN ASSOCIATION FOR COMPUTER GRAPHICS, vol. 29, no. 1, 1 March 2010 (2010-03-01), pages 191-201, XP055220366, Oxford ISSN: 0167-7055, DOI: 10.1111/j.1467-8659.2009.01590.x | 1,2,6,7, 10-15 | |
| A | * figures 3-11 *<br>* abstract *<br>* chapter: 1. "Introduction"; page 191 - page 192 *<br>* chapters: 4. "Concept"-4.4 "Rendering of the 3D DVR view"; page 193 - page 196 * | 3-5,8,9 | |

**TECHNICAL FIELDS SEARCHED (IPC)**

G06T

-/--

The present search report has been drawn up for all claims

| Place of search | Date of completion of the search | Examiner |
|---|---|---|
| Berlin | 23 April 2021 | Höller, Helmut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 20 7241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 692 267 B1 (PETKOV KALOIAN [US]) 23 June 2020 (2020-06-23) | 1,13-15 | |
| A | * figures 2, 6, 9 * <br> * column 5, line 16 - column 9, line 9 * <br> * column 12, line 16 - line 21 * <br> ----- | 2-12 | |
| X | US 9 058 692 B1 (GRADY LEO [US] ET AL) 16 June 2015 (2015-06-16) | 1,13-15 | |
| A | * figure 3A * <br> * column 8, line 44 - column 9, line 41 * <br> ----- | 2-12 | |
| A | US 2018/144539 A1 (KREDI OREN [IL] ET AL) 24 May 2018 (2018-05-24) <br> * figure 2 * <br> * paragraphs [0051], [0067], [0122] * <br> ----- | 1-15 | |

**TECHNICAL FIELDS SEARCHED (IPC)**

The present search report has been drawn up for all claims

| Place of search | Date of completion of the search | Examiner |
|---|---|---|
| Berlin | 23 April 2021 | Höller, Helmut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 002 288 A1**

## ANNEX TO THE EUROPEAN SEARCH REPORT
## ON EUROPEAN PATENT APPLICATION NO.

EP 20 20 7241

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2021

| Patent document cited in search report | | Publication date | Patent family member(s) | | Publication date |
|---|---|---|---|---|---|
| US 2017262981 | A1 | 14-09-2017 | NONE | | |
| US 10206646 | B2 | 19-02-2019 | NONE | | |
| US 10692267 | B1 | 23-06-2020 | NONE | | |
| US 9058692 | B1 | 16-06-2015 | EP | 3132419 A1 | 22-02-2017 |
| | | | JP | 6409073 B2 | 17-10-2018 |
| | | | JP | 6557767 B2 | 07-08-2019 |
| | | | JP | 2017511188 A | 20-04-2017 |
| | | | JP | 2019018032 A | 07-02-2019 |
| | | | US | 9058692 B1 | 16-06-2015 |
| | | | US | 2015302631 A1 | 22-10-2015 |
| | | | US | 2016275716 A1 | 22-09-2016 |
| | | | US | 2018225863 A1 | 09-08-2018 |
| | | | US | 2020372701 A1 | 26-11-2020 |
| | | | WO | 2015160763 A1 | 22-10-2015 |
| US 2018144539 | A1 | 24-05-2018 | CN | 110249367 A | 17-09-2019 |
| | | | EP | 3545499 A1 | 02-10-2019 |
| | | | JP | 2020503628 A | 30-01-2020 |
| | | | US | 2018144539 A1 | 24-05-2018 |
| | | | US | 2020265632 A1 | 20-08-2020 |
| | | | WO | 2018097881 A1 | 31-05-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7968853 B

**Non-patent literature cited in the description**

- **BROSCH, T et al.** Foveal fully convolutional nets for multi-organ segmentation. *Medical Imaging 2018: Image Processing,* vol. 10574, 105740U
- **ROTZINGER, D. C et al.** Dark-blood" dual-energy computed tomography angiography for thoracic aortic wall imaging. *European radiology,* vol. 30 (1), 425-431

- **SONG, I. et al.** Virtual non-contrast CT using dual-energy spectral CT: feasibility of coronary artery calcium scoring. *Korean journal of radiology,* vol. 17 (3), 321-329